# EUROPÄISCHE PATENTANMELDUNG

(11) **EP 1 101 661 A2**
(43) Veröffentlichungstag der Anmeldung: **23.05.2001**
(21) Anmeldenummer: 00120153.2
(22) Anmeldetag: 21.09.2000
(51) Int. Cl.: B60R 21/20

(54) **Schnappverbindung zur Befestigung eines Gassackmoduls an einem Lenkrad**

(30) Priorität: 15.11.1999 DE 29920025 U
(71) Anmelder: TRW Automotive Safety Systems GmbH & Co. KG, 63743 Aschaffenburg (DE)
(72) Erfinder: Frisch, Ralph, 63776 Mömbris (DE)
(74) Vertreter: Sties, Jochen, Dipl.-Ing.

(57) **Zusammenfassung**

Eine Befestigungsvorrichtung (10), insbesondere zur Befestigung eines Gassackmoduls an einem Lenkrad, mit zwei Befestigungsarmen (16) und einem Befestigungsteil (14), wobei die Befestigungsarme (16) mit dem Befestigungsteil (14) eine Schnappverbindung eingehen, ist dadurch gekennzeichnet, daß die Befestigungsarme (16) das Befestigungsteil (14) im verbundenen Zustand umgreifen.

## Beschreibung

Die Erfindung betrifft eine Befestigungsvorrichtung, insbesondere zur Befestigung eines Gassackmoduls an einem Lenkrad, mit zwei Befestigungsarmen und einem Befestigungsteil, wobei die Befestigungsarme mit dem Befestigungsteil eine Schnappverbindung eingehen.

Die Befestigung des Gassackmoduls, das den Fahrer-Gassack enthält, an einem Lenkrad unterliegt verschiedenen Anforderungen. Sie muß zum einen so stabil sein, daß sie sich unter keinen Umständen während der Entfaltung des Gassacks im Rückhaltefall löst, sollte gleichzeitig aber für eventuelle Reparaturen oder einen Austausch des Gassackmoduls lösbar sein. Außerdem sollte der Zeitaufwand während des Einbaus des Gassackmoduls möglichst gering gehalten werden können. Diese Bedingungen können durch Schnappverbindungen erfüllt werden, bei denen elastische Arme in vorgesehene Vorsprünge an einem Gegenstück eingreifen. Nachteilig bei den bekannten Schnappverbindungen ist, daß diese nur schwer wieder zu lösen oder aber, wenn leicht lösbar, nicht stabil genug sind.

Aufgabe der Erfindung ist es, eine Befestigungsvorrichtung vorzustellen, die eine sichere und dennoch leicht lösbare Verbindung von zwei Bauteilen, insbesondere einem Gassackmodul und einem Lenkrad, ermöglicht.

Zu diesem Zweck ist vorgesehen, daß die Befestigungsarme der erfindungsgemäßen Befestigungsvorrichtung im verbundenen Zustand das Befestigungsteil umgreifen. Durch den beidseitigen Eingriff entsteht eine feste Verbindung zwischen den Befestigungsarmen und dem Befestigungsteil. Die Verbindung läßt sich durch das Auseinanderdrücken der Arme mit einem geeigneten Werkzeug leicht lösen. Von Vorteil ist, daß das Lösen der Verbindung zerstörungsfrei erfolgt. Da die Befestigungsarme nach innen vorgespannt sind, veringert sich die Gefahr einer Beschädigung der Arme.

In einer bevorzugten Ausführungsform der Erfindung sind die Befestigungsarme mit Haken versehen und das Befestigungsteil weist eine konkave Anlagefläche auf, in die entsprechende Anlageflächen der Haken im verbundenen Zustand eingreifen. Diese Konstruktion verbessert den Halt der Haken am Befestigungsteil. Außerdem dient die konkave Anlagefläche des Befestigungsteils als Führung für die Anlageflächen der Haken während des Lösens der Verbindung.

In einer bevorzugten Ausführungsform weisen das Befestigungsteil und die Befestigungsarme einander entsprechende Abschrägungen auf. Diese Abschrägungen bilden Führungen, die die Spreizbelastung der Befestigungsarme verringern und eine Beschädigung der Schnapp-haken während des Herstellens der Verbindung verhindern.

Vorzugsweise sind die Abschrägungen am Befestigungsteil so ausgebildet, daß sie einen Winkel bilden und daß die Befestigungsarme wieder in Richtung des Scheitels des Winkels gleiten, wenn die Verbindung nicht zustande kommt. Diese Ausbildung sorgt dafür, daß ein mit Befestigungsarmen versehenes Bauteil, insbesondere ein Gassackmodul, das zur Herstellung der Verbindung in ein das Befestigungsteil enthaltendes Bauteil, insbesondere ein Lenkrad, eingeschoben wird, wieder aus diesem herausgedrückt wird, wenn die Schnappverbindung nicht einrastet, so daß ein Montagefehler leicht zu erkennen ist. Diese Bewegung kann durch eine Feder unterstützt werden.

Vorteilhafterweise ist eine Baugruppe aus einem Lenkrad und einem Gassackmodul vorgesehen, wobei die Befestigungsarme mit dem Gassackmodul und das Befestigungsteil mit dem Lenkrad verbunden sind, um die Zugänglichkeit der Vorrichtung zu verbessern. Bevorzugt sind dabei die Befestigungsarme einstückig mit dem Gassackmodul, z.B. im Bereich eines Gasgeneratorträgers oder allgemein einer Modulstützstruktur, ausgebildet, und das Befestigungsteil ist einstückig mit dem Lenkrad, z.B. mit dessen Stützstruktur, ausgebildet. So wird gleichzeitig eine hohe Stabilität erreicht und die Zahl der benötigten Bauteile reduziert, da das Befestigungsteil bzw. die Befestigungsarme nicht als separate Elemente hergestellt werden müssen.

Weitere Merkmale und Vorteile der Erfindung ergeben sich aus der nachfolgenden Beschreibung eines Ausführungsbeispiels und der beigefügten Zeichnung, die einen Schnitt durch eine erfindungsgemäße Befestigungsvorrichtung zeigt.

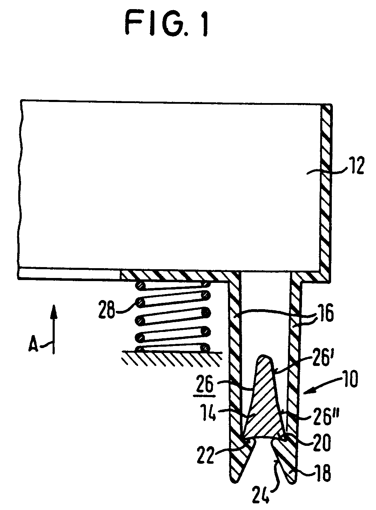

In Figur 1 ist eine erfindungsgemäße Befestigungsvorrichtung 10 dargestellt, die ein Bauteil, z.B. den Gasgeneratorträger 12 eines Gassackmoduls, mit einem z.B. an einem Lenkrad befestigten Befestigungsteil 14 durch eine Schnappverbindung verbindet. Die Befestigungsvorrichtung 10 weist zwei vorzugsweise aus Kunststoff bestehende Befestigungsarme 16 auf, die in Haken 18 enden. Im gezeigten verbundenen Zustand umgreifen die Haken 18 das Befestigungsteil 14 so, daß die flachen oder leicht konvexen Oberseiten 20 an einer entsprechenden hinterschnittenen, bevorzugt konkaven Fläche 22 am Befestigungsteil 14 anliegen. In diesem Zustand ist der Gasgeneratorträger 12 bezüglich Zug vom Lenkrad weg in Pfeilrichtung A gesichert.

Weiterhin weisen die Haken 18 der Befestigungsarme 16 Abschrägungen 24 an ihrer dem Befestigungsteil 14 zugewandten Seite auf. Das Befestigungsteil 14 zeigt entsprechende Abschrägungen 26. Sowohl die Abschrägungen 26 des Befestigungsteils als auch die Abschrägungen 24 der Haken bilden Winkel, deren Schenkel in Pfeilrichtung A gesehen aufeinander zulaufen. Die Abschrägungen 26 des Befestigungsteils sind bevorzugt mit zwei Stufen 26', 26" ausgebildet, wobei die erste Stufe der Abschrägungen 26' einen kleineren Winkel ein-schließt als die zweite Stufe 26".

Während des Herstellens der Verbindung wird das Gassackmodul gegen die Pfeilrichtung A in seine Aufnahme im Lenkrad eingeschoben, und die nach innen zum Befestigungsteil 14 hin vorgespannten Befestigungsarme 16 gleiten mit den Abschrägungen 24 entlang den Abschrägungen 26 und werden so sanft auseinandergedrückt, ohne daß die Kanten der Haken 18 beschädigt werden könnten. Zuerst erlauben die weniger steilen Abschrägungen 26' ein leichtes Aufsetzen und eine Verschiebung mit wenig Kraftaufwand, im Bereich der steileren Abschrägungen 26" erfolgt dann ein stärkerer Anstieg der Gegenkraft. Am Ende der Abschrägung 26" angelangt, schnappen die Haken die auseinandergespreizte Strecke zurück und umgreifen das Befestigungsteil 14.

Endet die Einschubbewegung des Gassackmoduls, bevor die Haken 18 in die Fläche 22 einrasten, werden die Befestigungsarme 16 und damit das Gassackmodul aufgrund der Form der Abschrägungen 26 des Befestigungsteils, vor allem der der Abschrägungen 26", und der Abschrägungen 24 der Haken durch die Federkraft der Befestigungsarme 16 wieder entgegen der Pfeilrichtung A vom Lenkrad weggedrückt. Diese Bewegung wird von einer zwischen dem Lenkrad und dem Gassackmodul angeordneten Feder 28 unterstützt, die bei der Einschubbewegung vorgespannt wird. So ist leicht zu erkennen, wenn die Schnappverbindung nicht zustande gekommen ist.

Zum Lösen der Verbindung werden die Haken 18 an ihren Abschrägungen 24 durch ein geeignetes Werkzeug, z.B. einen Schlitzschrau-bendreher, auseinandergedrückt, bis die Anlagefläche 22 des Befestigungsteils 14 die Anlageflächen 20 der Haken 18 freigibt. Die Fläche 22 dient dabei als Führung für die Flächen 20 der Haken. Sobald die Abschrägungen 24 der Haken 18 an den Abschrägungen 26 des Befestigungsteils anliegen, wird das Gassackmodul aufgrund der Form der Abschrägungen 24, 26 und der Federkraft der Befestigungsarme 16 soweit in Pfeilrichtung A bewegt, daß die Haken 18 das Befestigungsteil 14 nicht mehr umgreifen können. Die beim Einschieben des Gassackmoduls ins Lenkrad vorgespannte Feder 28 unterstützt diese Bewegung und drückt das Gassackmodul aus dem Lenkrad heraus.

## Patentansprüche

1. Befestigungsvorrichtung (10), insbesondere zur Befestigung eines Gassackmoduls an einem Lenkrad, mit zwei Befestigungsarmen (16) und einem Befestigungsteil (14), wobei die Befestigungsarme (16) mit dem Befestigungsteil (14) eine Schnappverbindung eingehen, gekennzeichnet dadurch, daß die Befestigungsarme (16) das Befestigungsteil (14) im verbundenen Zustand umgreifen.

2. Befestigungsvorrichtung nach einem der vorhergehenden Ansprüche, gekennzeichnet dadurch, daß die Befestigungsarme (16) Haken (18) aufweisen und daß das Befestigungteil (14) eine konkave Anlagefläche (22) aufweist, in die entsprechende Anlageflächen (20) der Haken (18) im verbundenen Zustand eingreifen.

3. Befestigungsvorrichtung nach einem der vorhergehenden Ansprüche, gekennzeichnet dadurch, daß das Befestigungsteil (14) und die Befestigungsarme (16) einander entsprechende Abschrägungen (24, 26) aufweisen.

4. Befestigungsvorrichtung nach einem der vorhergehenden Ansprüche, gekennzeichnet dadurch, daß die Abschrägungen (26) des Befestigungsteils (14) einen Winkel einschließen und daß die Haken (18) wieder in Richtung des Scheitels des Winkels gleiten, wenn die Verbindung nicht hergestellt wird.

5. Befestigungsvorrichtung nach Anspruch 1, gekennzeichnet dadurch, daß eine Baugruppe aus einem Lenkrad und einem Gassackmodul vorgesehen ist, wobei die Befestigungsarme (16) mit dem Gassackmodul und das Befestigungsteil (14) mit dem Lenkrad verbunden sind.

6. Befestigungsvorrichtung nach Anspruch 5, dadurch gekennzeichnet, daß die Befestigungsarme (16) einstückig mit dem Gassackmodul und das Befestigungsteil (14) einstückig mit dem Lenkrad ausgebildet sind.
